# EUROPEAN PATENT SPECIFICATION

(11) **EP 2 463 498 B1**
(45) Date of publication and mention of the grant of the patent: **20.07.2016**
(21) Application number: 10799684.5
(22) Date of filing: 01.06.2010
(51) Int. Cl.: F16C 3/14, F02B 75/04, F02F 7/00

(54) **MULTI-LINK PISTON-CRANK MECHANISM**
MEHRFACHVERKNÜPFUNGS-KOLBEN-KURBEL-MECHANISMUS
MECANISME PISTON-VILEBREQUIN DU TYPE A LIAISONS MULTIPLES

(30) Priority: 17.07.2009 JP 2009168674
(43) Date of publication of application: 13.06.2012
(73) Proprietor: Nissan Motor Co., Ltd., Yokohama-shi, Kanagawa 221-0023 (JP)
(72) Inventor: TANABE, Takashi, Kanagawa 243-0123 (JP); KOBAYASHI, Makoto, Kanagawa 243-0123 (JP); ARINAGA, Tsuyoshi, Kanagawa 243-0123 (JP); USHIJIMA, Kenshi, Kanagawa 243-0123 (JP)
(74) Representative: Grünecker Patent- und Rechtsanwälte PartG mbB
(86) International application number: PCT/JP2010/059247
(87) International publication number: WO 2011/007622

(56) References cited:
- EP-A2- 1 602 840
- GB-A- 1 229 078
- GB-A- 1 582 075
- JP-A- 11 030 223
- JP-A- 2006 132 456
- JP-A- 2008 064 056
- JP-T- 2004 518 068
- US-A- 5 174 249
- US-B1- 6 202 620

## Description

The present invention relates to a multi-link piston-crank mechanism according to the **preamble** of independent **claim** 1. Such a **multi-link** piston-crank mechanism can be taken from the prior art document JP 2008-064056 A.

Moreover, prior art document US 6,202,620 B1 discloses a crankshaft to be used in a single-link piston-crank mechanism. Said prior art discloses a lubricating structure for enhancing lubricating capability against a connecting-rod bearing part. In the structure, a crankshaft is provided, for one crank journal and one crank pin adjoining the crank journal, with a first oil hole and a second oil hole in pairs.

The applicants of the present invention are studying to realize optimized piston stroke characteristic and variable compression-ratio control by the use of a multi-link piston-crank mechanism (hereinafter referred to as "multi-link mechanism"), by which a piston pin of a piston and a crankpin of a crankshaft are linked to each other via a plurality of links, as a primary kinetic system in which the piston and the crankshaft of an internal combustion engine are linked to each other.

As described in JP2008-224015, in the case of a single-link piston-crank mechanism (hereinafter referred to as "single-link mechanism", by which a piston pin and a crankpin are linked to each other via a single link (a connecting rod), a crankthrow, corresponding to a distance from the axis of a crankshaft main journal to the axis (a rotation center) of a crankpin, is one-half (1/2) of the piston stroke, except a specific case that the axis of the main journal is offset from the cylinder centerline. In contrast, in the case of a multi-link mechanism, by the action of a leverage of the multi-link mechanism, comprised of an upper link, a lower link, and the like, it is possible to set a crankthrow shorter than one-half of the (maximum)
piston stroke. Therefore, by virtue of the shortened crankthrow, it is possible to attain downsizing, enhanced engine mountability, and high-compression-ratio engine. Also, due to the shortened crankthrow, the main journal and the crankpin can be laid out so as to approach each other in a decentering direction of the crankpin, and hence, as viewed in the axial direction of the crankshaft, the overlapping area, in which the main journal and the crankpin are overlapped with each other, tends to become greater, thus ensuring the enhanced rigidity and strength of the crankshaft.

By the way, the crankshaft is formed with oil passages for lubricating bearing portions of crankpins. Regarding each of the oil passages, lubricating oil is supplied from the cylinder-block side to the oil passage. One end of the oil passage, that is, the oil-passage pin-side opening is configured to be open at the outer peripheral surface of the crankpin. Note that a large magnitude of combustion load acts on the crankshaft in a decentering direction of the crankpin whose axis is displaced from the axis of the main journal. In order to avoid a stress concentration arising from the combustion load, as described in JP58-178012**,** the oil-passage pin-side opening is generally formed at an angular position of 90° or -90° with respect to a reference line extending in the crankpin decentering direction, that is, on either side of diametrically-opposing positions of both sides of the crankpin in the crankpin transverse direction perpendicular to the crankpin decentering direction.

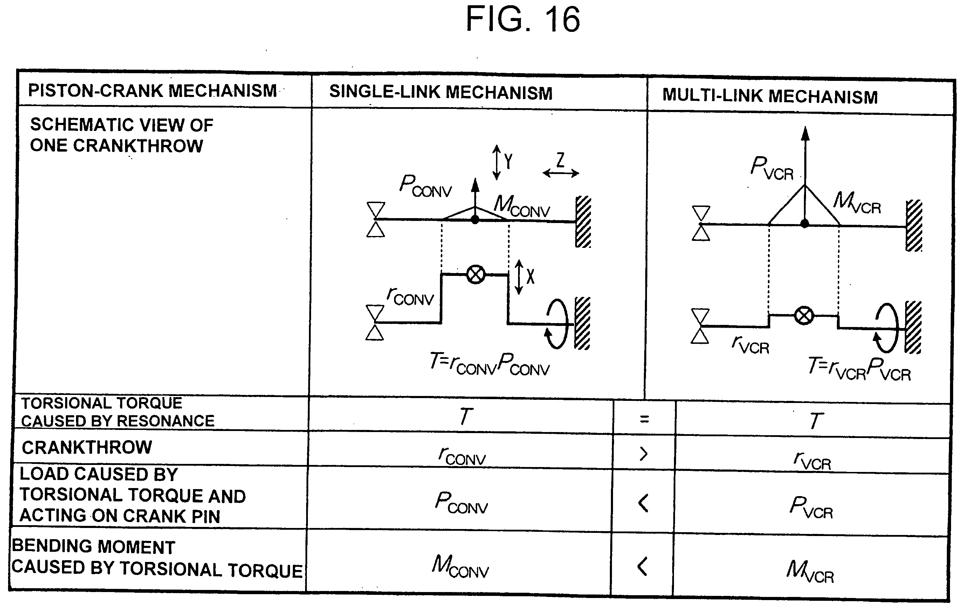

However, in the case that a crankthrow is set shorter than one-half of a (maximum) piston stroke, the inventors have discovered that the following problems arise. These problems are hereunder described in reference to Fig. 16. That is, regarding a crankshaft of a multi-cylinder internal combustion engine, a torsional moment (hereinafter referred to as "torsional torque T"), acting about the crank axis, is caused by resonance. Owing to the torsional torque T, a load P (inertial force) acts on the crankpin in the crankpin transverse direction perpendicular to both the crank axial direction Z and the crankpin decentering direction X. At the same time, a bending moment acting about the crank axis is produced. Assuming that a crankthrow is denoted by "r", the relation between torsional torque T and load P is represented by the expression T=rP. Thus, for the same magnitude of torque T, the shorter the crankthrow r, the greater the load P. Therefore, for the same piston stroke, in the case of a multi-link mechanism of a short crankthrow, the load P acting on the crankpin tends to become greater, rather than a single-link mechanism of a long crankthrow.

Hence, in the case of a crankshaft of an internal combustion engine to which a multi-link mechanism is applied, the influence of a load P caused by the previously-discussed torsional torque T and acting in the crankpin transverse direction as well as a load caused by an explosive power and acting in the crankpin decentering direction X must be fully taken into account. Assume that, as described in JP58-178012**,** in order to avoid a stress concentration arising from the explosive load (combustion load), the oil-passage pin-side opening, configured to be open at the outer peripheral surface of the crankpin, is formed at a position of 90° or -90° (i.e., 270° crankangle in the crank rotation direction) with respect to a reference line extending in the crankpin decentering direction. In such a case, owing to torsional torque T, a stress concentration occurs in the vicinity of the oil-passage pin-side opening. Additionally, owing to the shortened crank arm (the shortened crankthrow) of the multi-link mechanism, there are several drawbacks, namely, an increase in load caused by torsional torque T and acting in the crankpin transverse direction Y, and a locally high mechanical strength of either side of diametrically-opposing portions of the crankpin in its transverse direction, arising from the increased overlapping area of the crankpin and the main journal as viewed in the crank axial direction. From this point of view, assuming that the pin-side opening is formed on either side of the crankpin in the crankpin transverse direction, a stress concentration tends to be easily induced in the vicinity of the pin-side opening. As a countermeasure against such a stress concentration, to ensure the appropriate rigidity and mechanical strength, there is a necessity of increasing the diameter of the crankpin. This leads to the difficulty of providing a compact internal combustion engine including a multi-link mechanism.

It is an object of the present invention to provide a multi-link piston-crank mechanism that allows a compact structure.

According to the present invention said object is solved by a multi-link piston-crank mechanism according to the independent claim 1. Preferred embodiments are laid down in the dependent claims.

The present invention has been realized, while paying its attention to a demerit newly caused by a crankthrow shortened by using a multi-link mechanism. That is, the present invention relates to a crankshaft of an internal combustion engine employing a multi-link piston-crank mechanism having an upper link whose one end is linked to a piston via a piston pin, a lower link linked to the other end of the upper link via an upper pin and also linked to a crankpin of a crankshaft, and an auxiliary link, one end of the auxiliary link being pivotally supported on a main-body side of the engine, and the other end of the auxiliary link being linked to the lower link via an auxiliary pin.

A crankthrow from the axis of a main journal of the crankshaft to the axis of the crankpin is set shorter than one-half of a stroke of the piston. Additionally, as viewed in the crank axial direction, the crankpin and the main journal are overlapped with each other.

Owing to the shortened crankthrow, a load caused by torsional torque and acting in a transverse direction of the crankpin tends to become great, and the overlapping area of the crankpin and the main journal in the crankpin transverse direction also tends to increase. Therefore, regarding oil passages for supplying lubricating oil to bearing portions of crankpins, assuming that the oil-passage pin-side opening, configured to be open at the outer peripheral surface of the crankpin, is formed on either side of diametrically-opposing portions of the crankpin in the crankpin transverse direction, that is, at a position of 90° or -90° with respect to a reference line directed from the axis of the main journal toward the axis of the crankpin and extending in the crankpin decentering direction, a stress tends to concentrate in the vicinity of the pin-side opening.

Thus, in a crankshaft of the invention, the pin-side opening is formed in ranges other than angular ranges of 90° or -90° with respect to the reference line extending from the axis of the main journal toward the axis of the crankpin in the crankpin decentering direction, that is, formed in ranges other than both sides of the crankpin in its transverse direction.

### EFFECTS OF THE INVENTION

According to the invention, regarding a crankshaft of an internal combustion engine having a crankthrow shortened by using a multi-link mechanism, a pin-side opening of an oil passage, configured to be open at an outer peripheral surface of a crankpin, is formed in ranges other than both sides of the crankpin in the crankpin transverse direction, thereby suppressing or alleviating a stress concentration occurring in the vicinity of the pin-side opening owing to torsional torque, and consequently achieving the compactified crankpin whose diameter is properly reduced, while ensuring a required strength and rigidity.

### BRIEF DESCRIPTION OF THE DRAWINGS

[FIG. 1] Fig. 1A is a side view illustrating a crankshaft concerned with a first embodiment, made according to the invention, and Fig. 1B is a cross-sectional view illustrating the crankshaft of the first embodiment.
[FIG. 2] Fig. 2 is a cross-sectional view illustrating a crankshaft concerned with a second embodiment, made according to the invention.
[FIG. 3] Fig. 3 is a cross-sectional view illustrating a crankshaft concerned with a third embodiment, made according to the invention.
[FIG. 4] Fig. 4 is a load diagram of a crankshaft concerned with a fourth embodiment, made according to the invention. [FIG. 5] Fig. 5 is a cross-sectional view illustrating the crankshaft of the fourth embodiment.
[FIG. 6] Fig. 6 is a front elevation schematically illustrating a lower link and an upper link included in a multi-link mechanism concerned with a fifth embodiment, made according to the invention.
[FIG. 7] Figs. 7A-7B are explanatory views illustrating a peripheral oil groove and a splash hole, formed in the lower link concerned with the fifth embodiment, at two different crankangles.
[FIG. 8] Fig. 8 is a load diagram of a lower link concerned with a sixth embodiment, at a crankpin bearing portion.
[FIG. 9] Fig. 9 is a front elevation illustrating the lower link concerned with the sixth embodiment.
[FIG. 10] Fig. 10A is a perspective view schematically illustrating a crankpin bearing portion concerned with a seventh embodiment, made according to the invention, and Fig. 10B is a cross-section of the same.
[FIG. 11] Fig. 11A is a front elevation illustrating a lower link and an upper link concerned with an eighth embodiment, made according to the invention, and Fig. 11B is a cross-section of the lower link and the upper link, at a crankpin bearing portion.
[FIG. 12] Fig. 12A is a front elevation illustrating a lower link and an upper link concerned with a ninth embodiment, made according to the invention, and Fig. 12B is a cross-section of the lower link and the upper link, at a crankpin bearing portion.
[FIG. 13] Fig. 13 is an assembled view schematically illustrating a multi-link piston-crank mechanism, made according to the invention.
[FIG. 14] Fig. 14 is a disassembled view of the multi-link piston-crank mechanism of Fig. 13.
[FIG. 15] Fig. 15 is an explanatory view illustrating a position of formation of an oil-passage pin-side opening, common to all of the embodiments.
[FIG. 16] Fig. 16 is an explanatory view illustrating a relation between a load caused by torsional torque and acting on a crankpin and a crankthrow.
[FIG. 17] Fig. 17 is an explanatory view illustrating a change in stress produced in an oil passage, in accordance with a change in the position of formation of a pin-side opening of the oil passage in a crank rotation direction.

### DESCRIPTION OF THE PREFERRED EMBODIMENTS

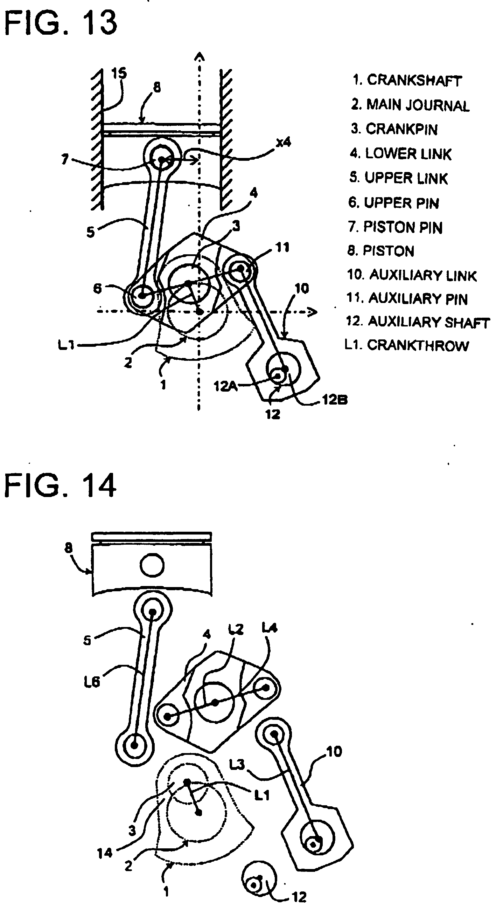

The preferred embodiments of the invention are hereinafter described in reference to the drawings. Figs. 13-14 are assembled/disassembled views schematically illustrating a multi-link piston-crank mechanism (simply, a multi-link mechanism) of an internal combustion engine to which a crankshaft of the invention is applied. A cylinder block has a plurality of cylinders formed therein. A piston 8 is slidably fitted in each of the cylinders. A main journal 2 of a crankshaft 1 is rotatably supported on the cylinder block.

As described in the previously-noted JP2008-224015, a multi-link piston-crank mechanism is well-known. Briefly speaking, the multi-link mechanism is comprised of an upper link 5 whose one end is linked to the piston 8 via a piston pin 7, a lower link 4 linked to the other end of the upper link 5 via an upper pin 6 and also linked to a crankpin 3 of the crankshaft 1, and an auxiliary link 10, one end (the lower end) of the auxiliary link being pivotally supported on the cylinder-block side, corresponding to a main-body side of the internal combustion engine, and the other end (the upper end) of the auxiliary link being linked to the lower link 4 via an auxiliary pin 11. Regarding crankshaft 1, main journal 2 and crankpin 3 are connected via a crank web 14.

Hereupon, L1 denotes a crankthrow from the axis of main journal 2 to the axis of crankpin 3, L2 denotes a distance from the geometric center of the crankpin bearing portion of lower link 4 to the geometric center of the upper-pin bearing portion of lower link 4, L3 denotes a distance from the geometric center of the auxiliary-pin bearing portion of auxiliary link 10 to the geometric center of an eccentric shaft portion 12B, L4 denotes a distance from the geometric center of the crankpin bearing portion of lower link 4 to the geometric center of the auxiliary-pin bearing portion of lower link 4, L6 denotes a distance from the geometric center of the piston-pin bearing portion of upper link 5 to the geometric center of the upper-pin bearing portion of upper link 5, and x4 denotes an offset amount of the center of piston pin 7 (reciprocating along a cylinder centerline) from the crankshaft main journal centerline.

As compared to a single-link mechanism in which a piston pin and a crankpin are connected by one connecting link, such a multi-link mechanism, in which piston pin 7 and crankpin 3 are connected via a plurality of links, has a higher degree of freedom of piston stroke characteristic settings. By optimizing the piston stroke characteristic, for instance, by tuning the piston stroke characteristic to a characteristic close to a simple harmonic oscillation, it is possible to remarkably attenuate noise and vibrations.

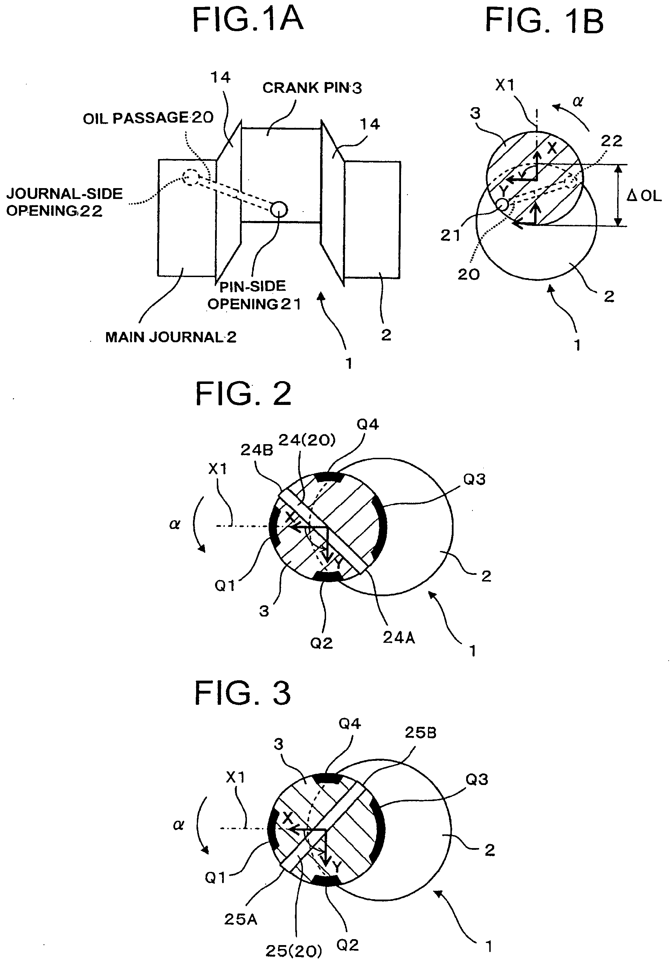

The previously-noted crankthrow L1 is set shorter than one-half of the (maximum) piston stroke. Hence, in comparison with a popular single-link mechanism in which a crankthrow is one-half of a piston stroke, in the case of the multi-link mechanism, for the same engine compression ratio, by virtue of the shortened crankthrow L1, it is possible to attain the enhanced rigidity and strength and downsizing. Also, for the same length of crankthrow L1, it is possible to attain high-compression-ratio engine. As a result of the shortened crankthrow, as viewed in the crank axial direction, the crankpin and the main journal are overlapped with each other. Thus, the crankshaft has such an overlapping area (denoted by ΔOL in Fig. 1B), in which the crankpin and the main journal are overlapped with each other in the decentering direction of the crankpin.

Furthermore, a journal portion 12A of auxiliary shaft 12, which extends continuously over the plurality of cylinders, is rotatably supported on the cylinder block via support members (not shown). Auxiliary shaft 12 has the previously-discussed auxiliary shaft portion 12B provided for each engine cylinder. The other end of auxiliary link 10 is pivotably linked to the associated eccentric shaft portion 12B. Hence, by changing the rotational position of auxiliary shaft 12 by means of an actuator (not shown) depending on engine operating conditions, the position of eccentric shaft portion 12B, serving as a fulcrum of oscillating motion of auxiliary link 10, can be changed, and therefore an engine compression ratio can be changed owing to a change in a motion-restriction condition that motion of lower link 4 is restricted by means of auxiliary link 10 (variable compression ratio means). As discussed above, it is possible to easily realize variable engine-compression-ratio control by the use of a multi-link piston-crank mechanism.

The specific construction, operation and effects of the embodiments are hereunder described in detail. As clearly shown in Fig. 1, crankshaft 1 has an oil passage 20 formed therein, for supplying lubricating oil from the cylinder-block side to the crankpin bearing portion. One end of oil passage 20, that is, a pin-side opening 21 is configured to be open at the outer peripheral surface of crankpin 3.

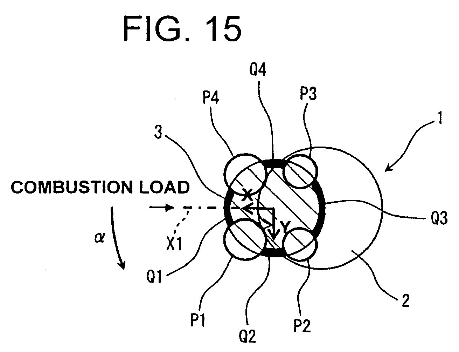

First of all, regarding the specific construction, common to all of the embodiments, as shown in Fig. 15, the oil-passage pin-side opening, configured to be open at the outer peripheral surface of the crankpin, is located and formed in either one of angular ranges P1-P4, substantially corresponding to 45 degrees, 135 degrees, 225 degrees, and 315 degrees in a crank rotation direction α (i.e., in a revolving direction of crankpin 3 about the main journal 2) with respect to a reference line X1 extending from the main journal toward the axis of the crankpin in the crankpin decentering direction X. That is, the center position of pin-side opening 21 is formed in either one of angular positions of 45 degrees, 135 degrees, 225 degrees, and 315 degrees, or formed in either one of angular ranges of 45°±10°, 135°±10°, 225°±10°, and 315°±10°. In other words, pin-side opening 21 is formed in ranges other than angular ranges Q1 and Q3 in which combustion load and/or inertial load acts in the crankpin decentering direction X, that is, angular ranges Q1 and Q3, substantially corresponding to 0° and 180° in the crank rotation direction α with respect to the reference line X1, or formed in ranges other than angular ranges Q2 and Q4 in which a load caused by torsional torque acts in the crankpin transverse direction Y, that is, angular ranges Q2 and Q4, substantially corresponding to 90° and 270° (-90°) in the crank rotation direction α with respect to the reference line X1.

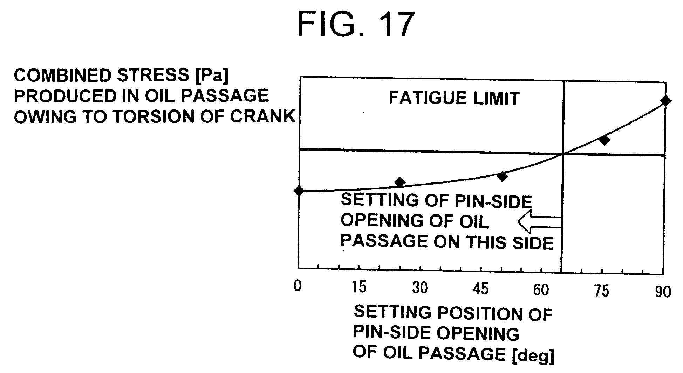

As discussed above, in the crankshaft that crankthrow L1 is shortened by the use of the multi-link mechanism, assume that the pin-side opening is formed in angular ranges Q2 and Q4 in the crankpin transverse direction Y, that is, in angular ranges Q2 and Q4, corresponding to diametrically-opposing portions of both sides of the crankpin in the crankpin transverse direction. A stress concentration tends to occur in the vicinity of the pin-side opening owing to a load caused by torsional torque and acting in the crankpin transverse direction Y. Also, this leads to the difficulty of ensuring an oil film in the vicinity of the pin-side opening. Due to such an inadequate oil film (a lack of oil film), there is a tendency for the fluid-lubrication performance to be lowered. In the case of the multi-link mechanism, on the one hand, by virtue of the shortened crankthrow, the overlapping area ΔOL increases and thus the strength and rigidity thereof also increase. On the other hand, owing to the shortened crankthrow, the rigidity of the overlapping area of crank web 14 for the load, caused by torsional moment and acting in the crankpin transverse direction perpendicular to both the crank axial direction and the crankpin decentering direction, tends to become locally high, and thus a stress concentration tends to be induced in the section other than the locally-high-rigidity section. Especially, a stress tends to concentrate in an oil passage formed to penetrate in the crankpin transverse direction. Therefore, by forming pin-side opening 21 in ranges other than angular ranges Q2 and Q4, corresponding to diametrically-opposing portions of both sides of the crankpin in the crankpin transverse direction, such a stress concentration can be suppressed and alleviated, thereby reducing the diameter of the crankpin, while ensuring a required strength and rigidity, and consequently achieving compactification. Additionally, it is possible to suppress a lack of oil film in the vicinity of the pin-side opening 21, thus enabling a good fluid-lubricating action. That is, the oil-passage opening on the side of crankpin 3 is formed in angular ranges in the crank rotation direction, in which a stress concentration cannot be produced in the oil passage without an inadequate oil film in the vicinity of pin-side opening 21 of oil passage (oil hole) 20. Fig. 17 shows a change in stress (a combined stress of a bending stress and a shearing stress) produced in the oil passage owing to torsion of the crankshaft in accordance with a change in the position of formation of the oil-passage pin-side opening in the internal combustion engine to which the multi-link piston-crank mechanism (the multi-link mechanism) shown in Fig. 13 is applied. In the shown embodiment, the internal combustion engine is an in-line four-cylinder internal combustion engine of 1.6-L displacement, provided with a multi-link piston-crank mechanism and a crankshaft 1, which includes crankpins 3, each having a diameter of 35 millimeters and made of chromium molybdenum steel material, such as SCM440H. As viewed in the axial direction of crankshaft 1, crankpin 3 is overlapped with the main journal 2 of crankshaft 1 by 22.8 millimeters in the crankpin decentering direction. When the setting position (the position of formation) of the oil-passage pin-side opening with respect to the reference line X1 exceeds 60 degrees, the stress (the combined stress of bending stress and shearing stress), produced in the oil passage owing to torsion (torsional oscillation), tends to exceed a fatigue limit (a critical stress), set based on a stress amplitude and a mean stress. For the reasons discussed above, the angular ranges Q2 and Q4 in the crankpin transverse direction Y, in which the oil-passage pin-side opening 21 should not be formed, substantially correspond to an angular range from 60 degrees to 120 degrees and an angular range from 240 degrees to 300 degrees.

Also, in angular ranges Q1 and Q3 in the crankpin decentering direction X, great combustion load and/or inertial load acts near the top dead center (TDC) and the bottom dead center (BDC). Thus, assuming that the pin-side opening is formed in angular ranges Q1 and Q3 in the crankpin decentering direction X, owing to the leverage of the multi-link mechanism, a further increased magnitude of combustion load/inertial load tends to repeatedly act on the pin-side opening near the piston TDC position and the piston BDC position of each engine cylinder. That is, as discussed previously, there is a risk of the occurrence of stress concentration and lowered fluid-lubrication performance arising from an inadequate oil film. In contrast to the above, when the pin-side opening 21 is located and formed in ranges other than angular ranges Q1 and Q3 in which great combustion load and/or inertial load acts, the combustion load and/or inertial load never acts directly in the vicinity of the pin-side opening 21. Thus, it is possible to suppress a lack of oil film in the vicinity of the pin-side opening 21, while alleviating and reducing a stress concentration in the vicinity of the pin-side opening 21, thus enabling a good fluid-lubricating action.

The technical term "angle" described later, basically means an angle measured in the crank rotation direction α with respect to the reference line X1 extending from the crankpin center taken as an origin.

In the first embodiment shown in Figs. 1A-1B, oil passage 20 is formed to straightly penetrate the inside of crankpin 3, crank web 14, and main journal 2 over the entire length from the pin-side opening 21, which is open at the outer peripheral surface of crankpin 3 to a journal-side opening 22, which is open at the outer peripheral surface of main journal 2. The previously-noted oil passage 20 is formed in the overlapping range ΔOL in which crankpin 3 and main journal 2 are overlapped with each other in the crankpin decentering direction X. Concretely, the pin-side opening 21 is located and formed in either one of angular ranges, substantially corresponding to 135 degrees and 225 degrees in the crank rotation direction with respect to the reference line X1, whereas the journal-side opening 22 is located and formed in either one of angular ranges, substantially corresponding to 315 degrees and 45 degrees in the crank rotation direction with respect to the reference line X1. That is, oil passage 20 is arranged within the overlapping range ΔOL and formed in ranges other than angular ranges Q1-Q4 (see Fig. 15), in which a large magnitude of load acts, in a manner so as to obliquely penetrate straight, as viewed in the crank axial direction. This contributes to a comparatively short entire oil-passage length as well as easy machining. In Figs. 1A-1B, for the purpose of clarification, each of the openings are exaggeratedly shown such that the inside diameter of each of openings 21-22 is greater than that of oil passage 20, but actually, oil passage 20 is formed as a through hole having the same cross-section as each of the openings 21-22.

As discussed previously, in comparison with a single-link mechanism, in the case of the multi-link mechanism, by virtue of the shortened crank-arm (shortened crankthrow L1), the overlapping area ΔOL increases and thus the strength and rigidity thereof also increase. Hence, it is possible to easily form the previously-noted oil passage 20 by way of which the outer peripheries of main journal 2 and crankpin 3 are connected each other straightly and directly. Additionally, by forming the oil passage 20 within the overlapping range ΔOL, there is a less risk of reducing the strength and rigidity owing to formation of oil passage 20. Furthermore, machining the straight oil passage 20 eliminates the need for forming additional radial oil passages in the crankpin and/or the main journal. This contributes to the reduced machining time and costs, and also ensures a required strength and rigidity.

In the second embodiment shown in Fig. 2, as a part of oil passage 20, a radial oil passage 24 is further formed to penetrate crankpin 3 in the diametral direction of the crankpin. Radial oil passage 24 has two opposite openings, which are open at the outer peripheral surface of crankpin 3, namely, the first pin-side opening 24A located and formed in an angular range substantially corresponding to 135 degrees, and the second pin-side opening 24B located and formed in an angular range substantially corresponding to 315 degrees. Lubricating oil is supplied from the cylinder-block side via another oil passage (not shown) formed in the crankshaft to the radial oil passage 24, and then further delivered through the pin-side openings 24A-24B to the crankpin bearing portion.

According to the second embodiment, radial oil passage 24 is formed to straightly penetrate crankpin 3 in the diametral direction of the crankpin, thus facilitating machining. Additionally, oil can be supplied to the crankpin bearing portion through the two opposite pin-side openings 24A-24B of both ends of radial oil passage 24, thus resulting in an increase in the lubricating-oil amount.

In ta similar manner to the second embodiment, in the third embodiment shown in Fig. 3, as a part of oil passage 20, a radial oil passage 25 is further formed to penetrate crankpin 3 in the diametral direction of the crankpin. Lubricating oil is supplied from the cylinder-block side via another oil passage (not shown) formed in the crankshaft to the radial oil passage 25, and then further delivered through pin-side openings 25A-25B to the crankpin bearing portion. The third embodiment differs from the second embodiment, in that the first pin-side opening 25A of radial oil passage 25, which is open at the outer peripheral surface of crankpin 3, is located and formed in an angular range substantially corresponding to 45 degrees around the crankpin, and the second pin-side opening 25B, which is open at the outer peripheral surface of crankpin 3, is located and formed in an angular range substantially corresponding to 225 degrees around the crankpin.

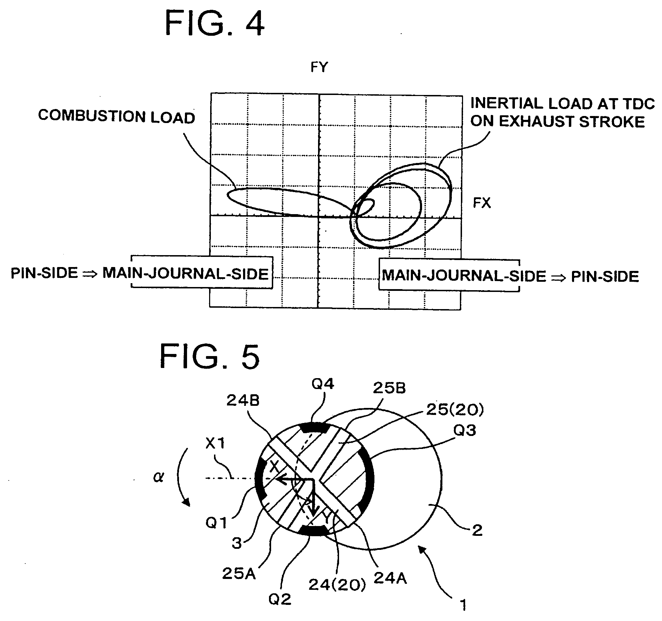

By the way, in the internal combustion engine having the multi-link mechanism, the crankangle, corresponding to the piston TDC position, tends to phase-retard with respect to the reference position of revolution of the crankshaft (exactly, the crankangle at which the crankpin decentering direction X is identical to the crankshaft main journal centerline). As seen from the load diagram of Fig. 4, combustion load acting from the crankpin side toward the main journal side, tends to act in an angular range substantially corresponding to an angle displaced from the reference position of revolution of the crankshaft in the direction (i.e., in the clockwise direction) opposite to the crank rotation direction, that is, in an angular range substantially corresponding to 315 degrees (-45 degrees).

As compared to the second embodiment, the third embodiment is superior for the reasons discussed below. That is, in the third embodiment, radial oil passage 25 is formed to be obliquely inclined by 45 degrees in the crank rotation direction with respect to the crankpin decentering direction X, such that the pin-side openings 25A-25B are formed in the respective angular ranges, substantially corresponding to 45 degrees and 225 degrees. Thus, it is possible to suppress or alleviate the openings from being affected by combustion load acting in the angular range substantially corresponding to 315 degrees (-45 degrees).

In the fourth embodiment shown in Fig. 5, the crankpin has two radial oil passages 24-25, each formed to penetrate crankpin 3 in the diametral direction of the crankpin. In a similar manner to the second embodiment, the two opposite pin-side openings 24A-24B of the first radial oil passage 24, which are open at the outer peripheral surface of crankpin 3, are located and formed in respective angular ranges substantially corresponding to 135 degrees and 315 degrees. In a similar manner to the third embodiment, the two opposite pin-side openings 25A-25B of the second radial oil passage 25, which are open at the outer peripheral surface of crankpin 3, are located and formed in respective angular ranges substantially corresponding to 45 degrees and 225 degrees. In the fourth embodiment, four pin-side openings 24A, 24B, 25A, and 25B are formed in the outer peripheral surface of crankpin 3, thereby enabling a further increase in the amount of lubricating oil supplied to the crankpin bearing portion.

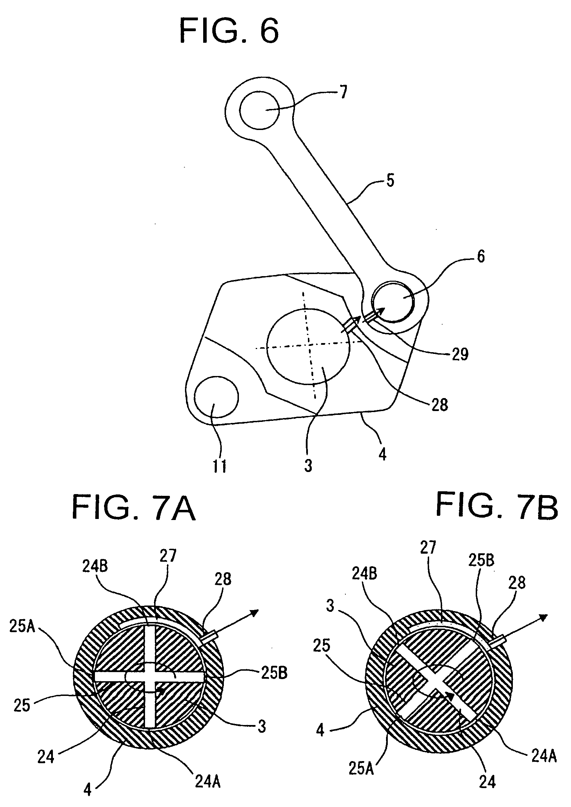

Referring to Figs. 6, and Figs. 7A-7B, there are shown the oil-passage structure of the lower-link side of the fifth embodiment, utilizing the crankshaft-side oil-passage structure well. By the provision of the two radial oil passages 24-25 formed in crankpin 3, four pin-side openings 24A, 24B, 25A, and 25B are formed in the outer peripheral surface of crankpin 3 in a manner so as to be circumferentially equidistant-spaced from each other, that is, in a manner so as to be open every predetermined angular intervals, such as 90 degrees.

Also, lower link 4 has a peripheral oil groove 27 and a splash hole 28 formed therein. Peripheral oil groove 27 is formed as a radially-outward recessed groove in the crankpin bearing surface of lower link 4 in a manner so as to extend in the peripheral direction over an angular range of 90 degrees. Splash hole 28 is provided to inject and supply lubricating oil toward a designated bearing portion, that is, the bearing portion of upper pin 6 in the fifth embodiment. One opening end of splash hole 28 is configured to open into the bottom face of peripheral oil groove 27, whereas the other opening end of splash hole 28 is configured to open into the bottom face of the forked pin-boss portion that supports the upper pin 6. Thus, lubricating oil, supplied from peripheral oil groove 27 to splash hole 28, can be injected and fed toward the upper-pin side (upper pin 6).

In this manner, four pin-side openings 24A, 24B, 25A, and 25B are formed in the outer peripheral surface of crankpin 3 in a manner so as to be circumferentially equidistant-spaced from each other every predetermined angular intervals, such as 90 degrees. Peripheral oil groove 27 is circumferentially recessed in the lower-link side (lower link 4) over the same angular range (i.e., 90 degrees) as the angular interval between the two adjacent openings of these pin-side openings 24A, 24B, 25A, and 25B. Hence, during operation, either one of pin-side openings 24A, 24B, 25A, and 25B approaches the peripheral oil groove 27 in a manner so as to be brought into fluid-communication with the peripheral oil groove 27. For instance, at given degrees of crankangle shown in Fig. 7A, the pin-side opening 24B is brought into fluid-communication with the peripheral oil groove 27. Thereafter, when the crankshaft further rotates given degrees of crankangle, as shown in Fig. 7B, the pin-side opening 25B is brought into fluid-communication with the peripheral oil groove 27. In this manner, regardless of the crankangle, lubricating oil can be supplied from either one of pin-side openings 24A, 24B, 25A, and 25B via peripheral oil groove 27 and then injected and delivered through splash hole 28 into the upper-pin side. Thus, it is possible to increase the feed rate of lubricating oil toward the upper-pin side, thereby enhancing the fluid-lubrication performance and the cooling performance by virtue of oil spray/splash.

More preferably, a radially-penetrating upper-link side oil passage 29 may be formed in the pin-bearing portion of upper link 5 for upper pin 6, in a manner so as to be oriented substantially in the oil-splay direction of splash hole 28, and hence part of lubricating oil splayed from splash hole 28 can be more certainly supplied through the upper-link side oil passage 29 to the upper-pin bearing portion (upper pin 6).

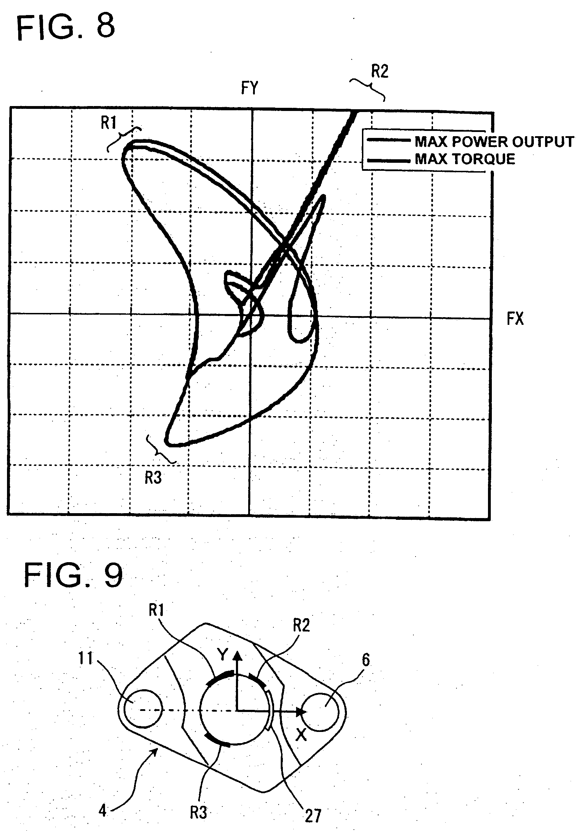

Referring to Fig. 8, there is shown the load diagram for the crankpin bearing portion. As seen from this load diagram, load, acting on the crankpin bearing portion of lower link 4, tends to become high locally at predetermined angular ranges R1, R2, and R3. Therefore, in the sixth embodiment of Fig. 9, peripheral oil groove 27 is formed in ranges of the crankpin bearing portion other than the above-mentioned angular ranges R1, R2, and R3, in which a large magnitude of load acts. Concretely, peripheral oil groove 27 is formed in a 90° angular range whose center is an angular position intersecting with the direction X directed from the axis of the crankpin bearing portion of the lower link toward the axis of the upper-pin bearing portion (upper pin 6) of the lower link. Hence, it is possible to avoid three great loads, namely, combustion load, inertial load at the piston TDC position, and inertial load at the piston BDC position from acting directly on the peripheral oil groove 27.

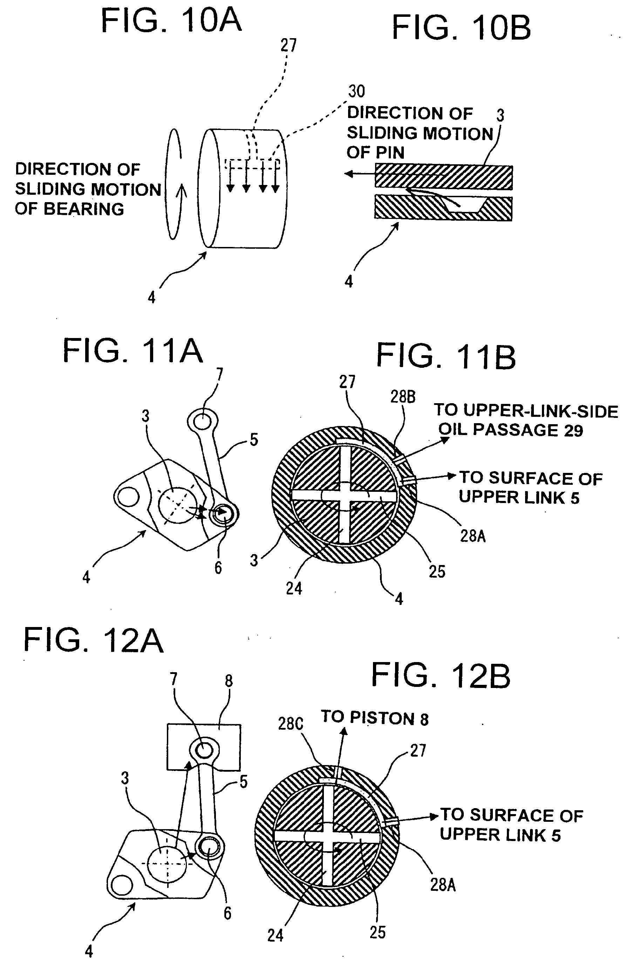

In the seventh embodiment shown in Figs. 10A-10B, an oil-sump portion 30 is formed in the crankpin bearing surface of lower link 4 as a recessed portion extending in the axial direction of the crankpin. Oil-sump portion 30 is connected to the upstream-side end of peripheral oil groove 27 in the direction of sliding motion of the bearing portion (i.e., in the rotation direction of the crankpin bearing portion of lower link 4). Additionally, the oil-sump portion is formed to extend to the vicinity of each axial end of the crankpin bearing portion of lower link 4. However, oil-sump portion 30 is closed at both ends without extending to each axial end of the crankpin bearing portion of lower link 4.

With the previously-discussed oil-passage structure, lubricating oil, supplied from the crankpin-side (crankpin 3) oil passage to peripheral oil groove 27 of lower link 4, can be delivered into the oil-sump portion 30 by virtue of rotation of crankpin 3. Additionally, due to a shearing stress arising from viscosity, part of lubricating oil is flown out in such a manner as to be dragged in the direction of sliding motion of the crankpin (i.e., in the rotation direction of crankpin 3 relative to the crankpin bearing portion of lower link 4), that is, in the direction opposite to the direction of sliding motion of the crankpin bearing portion, thus ensuring stable supply of lubricating oil to the crankpin bearing portion.

By the way, oil-sump portion 30 is formed in ranges of the crankpin bearing surface other than the above-mentioned angular ranges R1, R2, and R3, in which a large magnitude of load acts, for example, in either one of angular ranges, substantially corresponding to 0°, 90°, 180° and 315°. Hence, it is possible to avoid a large magnitude of load from acting directly on the oil-sump portion 30.

In the eighth embodiment shown in Figs. 11A-11B, lower link 4 has two splash holes 28A and 28B formed therein in a manner so as to be arranged adjacent to each other and both communicating a single peripheral oil groove 27. The first splash hole 28A is provided to inject and supply lubricating oil mainly toward the bearing surface of the upper-pin bearing portion of upper link 5, whereas the second splash hole 28B is provided to inject and supply lubricating oil mainly toward the upper-link side oil passage 29 (see Fig. 6) formed in the pin-bearing portion of upper link 5 for upper pin 6.

In the ninth embodiment shown inn Figs. 12A-12B, lower link 4 has two splash holes 28A and 28C formed therein in a manner so as to be circumferentially spaced from each other and both communicating a single peripheral oil groove 27. The first splash hole 28A is provided to inject and supply lubricating oil mainly toward the bearing surface of the upper-pin bearing portion of upper link 5, whereas the second splash hole 28C is provided to inject and supply lubricating oil mainly toward the piston 8 for the purpose of cooling the piston 8 and also lubricating the piston-pin bearing portion.

As appreciated from the eighth and ninth embodiments, by virtue of a plurality of splash holes 28 formed in lower link 4, it is possible to effectively inject and supply lubricating oil toward a plurality of moving parts to be lubricated and cooled.

### REFERENCE SIGNS LIST

1 ··· CRANKSHAFT
2 ··· MAIN JOURNAL
3 ··· CRANKPIN
4 ··· LOWER LINK
5 ··· UPPER LINK
6 ··· UPPER PIN
7 ··· PISTON PIN
8 ··· PISTON
10 ··· AUXILIARY LINK
11 ··· AUXILIARY PIN
20 ··· OIL PASSAGE
21 ··· PIN-SIDE OPENING
22 ··· JOURNAL-SIDE OPENING
24, 25 ··· RADIAL OIL PASSAGES
24A, 24B, 25A, 25B ··· PIN-SIDE OPENINGS
27 ··· PERIPHERAL OIL GROOVE
28 ··· SPLASH HOLE
X ··· CRANKPIN DECENTERING DIRECTION
Y ··· CRANKPIN TRANSVERSE DIRECTION

## Claims

1. A multi-link piston-crank mechanism having a crankshaft (1), an upper link (5) whose one end is linked to a piston (8) via a piston pin (7), a lower link (4) linked to the other end of the upper link (5) via an upper pin (6) and linked to a crankpin (3) of the crankshaft (1), and an auxiliary link (10), one end of the auxiliary link (10) being pivotally supported on a main-body side of the engine, and the other end of the auxiliary link (10) being linked to the lower link (4) via an auxiliary pin (11), wherein a crankthrow (L1) from an axis of a main journal (2) of the crankshaft (1) to an axis of the crankpin (3) is set shorter than one-half of a stroke of the piston (8), and, as viewed in an axial direction of the crankshaft (1), the crankpin (3) and the main journal (2) are overlapped with each other, **characterized by** an oil passage (20) formed in the crankshaft (1) for supplying lubricating oil to a bearing portion of the crankpin (3),
wherein a pin-side opening (21) of the oil passage (20), which is open at an outer peripheral surface of the crankpin (3), is formed in angular ranges other than angular ranges (Q2, Q4) of 90° and -90° with respect to a reference line (X1) extending from the axis of the main journal (2) toward the axis of the crankpin (3) in a decentering direction (X) of the crankpin (3), wherein the pin-side opening (21) is formed in the angular ranges other than angular ranges (Q1, Q3) located in the crankpin decentering direction (X).

2. A multi-link piston-crank mechanism according to claim 1, **characterized in that** the oil passage (20) is formed to straightly penetrate over an entire length from the pin-side opening (21) to a journal-side opening (22), which is open at an outer peripheral surface of the main journal (2).

3. A multi-link piston-crank mechanism according to claim 2, **characterized in that** the oil passage (20) is formed in an overlapping range (ΔOL) in which the crankpin (3) and the main journal (2) are overlapped with each other in the crankpin decentering direction (X).

4. A multi-link piston-crank mechanism according to claim 1, **characterized in that the** oil passage (20) further includes a radial oil passage (24; 25) formed to straightly penetrate the crankpin (3) in a diametral direction of the crankpin (3).

5. A multi-link piston-crank mechanism according to claim 4, **characterized in that** the pin-side openings (21) are formed in respective angular ranges of 45° and 225° in a crank rotation direction (α) with respect to the reference line (X1).

6. A multi-link piston-crank mechanism according to any one of preceding claims 1 to 5, **characterized in that** a plurality of pin-side openings (24A, 24B, 25A, 25B) are formed in the outer peripheral surface of the crankpin (3) in a manner so as to be circumferentially equidistant-spaced from each other;
a peripheral oil groove (27) is formed in a crankpin bearing surface of the lower link (4) in a manner so as to extend circumferentially;
a splash hole (28) is formed in the lower link (4) to inject and supply lubricating oil toward a designated bearing portion, one opening end of the splash hole being configured to open into the peripheral oil groove (27) and the other opening end being directed toward the designated bearing portion; and
the peripheral oil groove (27) is formed to circumferentially extend over the same angular range as an angular interval between the two adjacent pin-side openings (24B, 25B; 25B, 24A; 24A, 25A; 25A, 24B).

## Patentansprüche

1. Ein Mehr-Koppel-Kolben-Kurbel-Mechanismus, der eine Kurbelwelle (1), eine obere Koppel (5), deren eines Ende mit einem Kolben (8) über einen Kolben-Bolzen (7) gekoppelt ist, eine untere Koppel (4), gekoppelt zu dem anderen Ende der oberen Koppel (5) über einen oberen Bolzen (6) und gekoppelt zu einem Kurbelzapfen (3) von der Kurbelwelle (1), und eine Zusatz-Koppel (10) hat, ein Ende der Zusatz-Koppel (10) ist schwenkbar an einer Haupt-Körper-Seite des Motors gelagert, und das andere Ende der Zusatz-Koppel (10) ist an die untere Koppel (4) über einen Zusatz-Bolzen (11) gekoppelt, wobei ein Kurbel-Hub (L1) von einer Achse eines Hauptlagers (2) der Kurbelwelle (1) zu einer Achse des Kurbelzapfens (3) kürzer gesetzt ist als die Hälfte eines Hubs des Kolbens (8), und, wenn in einer Achsial-Richtung der Kurbelwelle (1) betrachtet, Überlappen der Kurbelzapfen (3) und das Hauptlager (2) miteinander, **gekennzeichnet durch** einen Öldurchgang (20), ausgebildet in der Kurbelwelle (1) zum Zuführen von Schmieröl zu einem Lagerabschnitt des Kurbelzapfens (3),
wobei eine Zapfen-Seiten-Öffnung (21) des Öldurchgangs (20), die zu einer äußeren Umfangsfläche des Kurbelzapfens (3) offen ist, in Winkelbereichen ausgebildet ist, anders als Winkelbereiche (Q2, Q4) von 90° und -90° mit Bezug auf eine Referenzlinie (X1), die sich von der Achse des Hauptlagers (2) zu der Achse des Kurbelzapfens (3) in einer Dezentrierungs-Richtung (X) des Kurbelzapfens (3) erstreckt, wobei die Zapfen-Seiten-Öffnung (21) in den Winkelbereichen anders als die Winkelbereiche (Q1, Q3), angeordnet in der Kurbelzapfen-Dezentrierungs-Richtung (X), ausgebildet ist.

2. Ein Mehr-Koppel-Kolben-Kurbel-Mechanismus gemäß Anspruch 1, **dadurch gekennzeichnet, dass** der Öldurchgang (20) ausgebildet ist, um gerade über die gesamte Länge von der Zapfen-Seiten-Öffnung (21) zu einer Lager-Seiten-Öffnung (22), die an der äußeren Umfangsfläche des Hauptlagers (2) offen ist, hindurchzutreten.

3. Ein Mehr-Koppel-Kolben-Kurbel-Mechanismus gemäß Anspruch 2, **dadurch gekennzeichnet, dass** der Öldurchgang (20) in einem Überlappungsbereich (ΔOL) ausgebildet ist, indem der Kurbelzapfen (3) und das Hauptlager (2) miteinander in der Kurbelzapfen-Dezentrierungs-Richtung (X) überlappen.

4. Ein Mehr-Koppel-Kolben-Kurbel-Mechanismus gemäß Anspruchs 1, **dadurch gekennzeichnet, dass** der Öldurchgang (20) weiterhin einen Radial-Öldurchgang (24; 25) beinhaltet, ausgebildet um gerade durch den Kurbelzapfen (3) in Durchmesser-Richtung des Kurbelzapfens (3) hindurchzutreten.

5. Ein Mehr-Koppel-Kolben-Kurbel-Mechanismus gemäß Anspruch 4, **dadurch gekennzeichnet, dass** die Zapfen-Seiten-Öffnungen (21) in jeweiligen Winkelbereichen von 45° und 225° in einer Kurbel-Dreh-Richtung (α) in Bezug auf die Referenzlinie (X1) ausgebildet sind.

6. Ein Mehr-Koppel-Kolben-Kurbel-Mechanismus gemäß irgendeinem der vorangehenden Ansprüche 1 bis 5, **dadurch gekennzeichnet, dass** ein Mehrzahl von Zapfen-Seiten-Öffnungen (24A, 24B, 25A, 25B) in der äußeren Umfangsfläche des Kurbelzapfens (3) in einer Weise ausgebildet sind, sodass diese umfänglich gleich beabstandet voneinander sind;
eine Rand-Ölnut (27) ist in einer Kurbelzapfen-Lagerfläche der unteren Koppel (4) in einer Weise ausgebildet, sodass diese sich umfänglich erstreckt;
ein Spritz-Loch (28) ist in der unteren Koppel (4) ausgebildet, um Schmieröl zu einem ausgewiesenen Lagerabschnitt zu spritzen und zuzuführen, ein Öffnungsende des Spritz-Lochs ist konfiguriert um in die Rand-Ölnut (27) zu öffnen und das andere Öffnungsende ist zu dem ausgewiesenen Lagerabschnitt gerichtet; und
die Rand-Ölnut (27) ist ausgebildet, um sich umfänglich über den gesamten Winkelbereich als ein Winkel-Intervall zwischen den zwei benachbarten Zapfen-Seiten-Öffnungen (24B,25B; 25B, 24A; 24A, 25A; 25A, 24B) zu erstrecken.

## Revendications

1. Mécanisme à bielle et piston du type à liaisons multiples comportant un vilebrequin (1), une liaison supérieure (5) dont une extrémité est reliée à un piston (8) par l'intermédiaire d'une tige de piston (7), une liaison inférieure (4) reliée à l'autre extrémité de la liaison supérieure (5) par l'intermédiaire d'une tige supérieure (6) et reliée à un maneton (3) du vilebrequin (1) et une liaison auxiliaire (10), une extrémité de la liaison auxiliaire (10) étant supportée de manière pivotante sur le côté corps principal du moteur, et l'autre extrémité de la liaison auxiliaire (10) étant reliée à la liaison inférieure (4) par l'intermédiaire d'une tige auxiliaire (11), dans lequel un bras de manivelle (L1) allant de l'axe du tourillon principal (2) du vilebrequin (1) jusqu'à l'axe du maneton (3) est réglée plus courte que la moitié de la course du piston (8) et, vus dans la direction axiale du vilebrequin (1), le maneton (3) et le tourillon principal (2) sont superposés entre eux, **caractérisée par**
un passage d'huile (20) formé dans le vilebrequin (1) pour délivrer de l'huile de lubrification à une partie d'appui du maneton (3),
dans lequel une ouverture côté tige (21) du passage d'huile (20), qui est ouverte au niveau de la surface périphérique externe du maneton (3), est formée en plages angulaires autres que des plages angulaires (Q2, Q4) de 90° et -90° par rapport à une ligne de référence (X1) s'étendant depuis l'axe du tourillon principal (2) vers l'axe du maneton (3) dans une direction de décentrage (X) du maneton (3), dans lequel l'ouverture côté tige (21) est formée dans les plages d'angulaires autres que les plages angulaires (Q1, Q3) disposées dans la direction de décentrage (X) du maneton.

2. Mécanisme à bielle et piston du type à liaisons multiples selon la revendication 1, **caractérisé en ce que** le passage d'huile (20) est formé de manière à pénétrer directement sur toute la longueur allant de l'ouverture côté tige (21) jusqu'à une ouverture côté tourillon (22), qui est ouverte au niveau de la surface périphérique externe du tourillon principal (2).

3. Mécanisme à bielle et piston du type à liaisons multiples selon la revendication 2, **caractérisé en ce que** le passage d'huile (20) est formé dans une plage de recouvrement (ΔOL) dans laquelle le maneton (3) et le tourillon principal (2) sont superposés entre eux dans la direction de décentrage (X) du maneton.

4. Mécanisme à bielle et piston du type à liaisons multiples selon la revendication 1, **caractérisé en ce que** le passage d'huile (20) comporte en outre un passage d'huile radial (24; 25) formé de manière à pénétrer directement dans le maneton (3) dans la direction diamétrale du maneton (3).

5. Mécanisme à bielle et piston du type à liaisons multiples selon la revendication 4, **caractérisé en ce que** les ouvertures côté tige (21) sont formées en plages angulaires respectives de 45° et 225° dans le sens de rotation de la manivelle (α) par rapport à la ligne de référence (X1).

6. Mécanisme à bielle et piston du type à liaisons multiples selon l'une quelconque des revendications 1 à 5 précédentes, **caractérisé en ce qu'**une pluralité d'ouvertures côté tige (24A, 24B, 25A, 25B) sont formées dans la surface périphérique externe du maneton (3) d'une manière telle à être espacées circonférentiellement de manière équidistante entre elles ;
une rainure d'huile périphérique (27) est formée dans une surface d'appui du maneton de la liaison inférieure (4) d'une manière telle à s'étendre circonférentiellement ;
un trou à éclaboussures (28) est formé dans la liaison inférieure (4) pour injecter et délivrer de l'huile de lubrification vers une partie d'appui désignée, une extrémité d'ouverture du trou à éclaboussures étant configurée pour s'ouvrir dans la rainure d'huile périphérique (27) et l'autre extrémité d'ouverture étant dirigée vers la partie d'appui désignée ; et
la rainure d'huile périphérique (27) est formée de manière à s'étendre circonférentiellement au-dessus de la même plage angulaire en tant qu'intervalle angulaire entre les deux ouvertures adjacentes côté tige (24B, 25B; 25B, 24A; 24A, 25A; 25A, 24B).
